# FASCICULE DE BREVET EUROPEEN

(11) **EP 0 795 273 B1**
(45) Date de publication et mention de la délivrance du brevet: **31.10.2001**
(21) Numéro de dépôt: 96200657.3
(22) Date de dépôt: 11.03.1996
(51) Int. Cl.: A23G 1/00, A23G 3/00

(54) **Traitement de fèves de cacao**
Kakaobohnenbehandlung
Treatment of cocoa-nibs

(43) Date de publication de la demande: 17.09.1997
(73) Titulaire: SOCIETE DES PRODUITS NESTLE S.A., 1800 Vevey (CH)
(72) Inventeur: Idriss, Faycal, 1630 Bulle (CH); Vareille, Philippe, 1806 Jongny (CH)
(74) Mandataire: Wavre, Claude-Alain

(56) Documents cités:
- DE-A- 2 324 343
- DE-A- 3 702 532
- FR-A- 545 361
- FR-A- 898 861
- FR-A- 1 364 889
- FR-A- 1 369 375
- FR-A- 2 515 485
- GB-A- 2 065 442
- US-A- 4 423 085
- PATENT ABSTRACTS OF JAPAN vol. 13, no. 221 (C-598), 23 Mai 1989 & JP-A-01 034247 (FUJI OIL CO.), 3 Février 1989,

## Description

La présente invention a pour objet des éclats de fèves de cacao caramélisés, un procédé de préparation de ces éclats de fèves de cacao caramélisés et un procédé d'utilisation de ces éclats de fèves de cacao caramélisés dans le domaine alimentaire.

Il est connu d'enrober, notamment par pulvérisation, des amandes avec un mélange contenant du sucre.

Ainsi, DE2239928 met en évidence du pralin qui ne colle pas. Le document décrit l'enrobage d'amandes par pulvérisation d'un sirop contenant de la cannelle, du cacao, de la vanille et du sucre de vanille puis leur glaçage à l'aide d'une préparation contenant notamment de la gomme arabique, de manière à éviter qu'elles ne collent entre elles.

Le document FR-A-1364889 se rapporte à l'incorporation de graines de cacao broyées et/ou éclatées dans des produits de confiserie; les graines étant utilisées non-fermentées, fermentées, grillées ou alcalinisées.

Le document JP-A-01034247 se rapporte à un procédé pour améliorer la saveur des graines de cacao dans lequel on fait subir à des graines sans leur periderme une décoction dans un mélange de sucre à une température de 130°-170°C dans des conditions sèches.

A ce jour, on ne connaît aucun procédé de préparation d'éclats de fèves de cacao caramélisés. Or, il serait très utile de pouvoir utiliser des éclats de fèves de cacao caramélisés dans le domaine alimentaire, notamment en les incorporant dans des produits alimentaires, de manière à donner à ces produits un goût prononcé de cacao.

La présente invention a pour but de répondre à ce besoin.

A cet effet, la présente invention a pour objet un procédé de préparation d'éclats de fèves de cacao caramélisés, dans lequel :
- on prépare un mélange comprenant 38-72% d'éclats de fèves de cacao, 18-40% de sucre et 10-22% d'eau et/ou de lait;
- on traite à chaud ce mélange à 90-120°C pendant 15-35 minutes, de manière à obtenir des éclats de fèves de cacao caramélisés,
- on tempère les éclats de fèves de cacao caramélisés à 75 - 100°C pendant 1-6 minutes,
- puis on les traite thermiquement à 110 - 150°C pendant 1-10 minutes.

On prépare donc un mélange comprenant au moins des éclats de fèves de cacao, du sucre et de l'eau et/ou du lait.

Les éclats de fèves de cacao peuvent provenir de fèves de cacao torréfiées ou non puis concassées ou non. On peut concasser les fèves de cacao en éclats de 1-10 mm, par exemple.
Le sucre peut être du saccharose ou un sucre inverti, comme le glucose ou le fructose, et peut être sous forme cristalline ou sous forme de sirop, par exemple. Le mélange comprend notamment de l'eau et/ou du lait, de manière à permettre la solubilisation du sucre dans le mélange. Le lait peut être du lait frais, du lait en poudre ou du lait concentré, par exemple.

Dans la suite de la description, les valeurs de température indiquées représentent les "températures moyennes du mélange" ou "les températures moyennes des éclats de fèves de cacao".

On traite à chaud le mélange à 90-120°C pendant 15-35 minutes, de manière à obtenir des éclats de fèves de cacao caramélisés, par exemple. Au cours de cette étape, une partie de l'eau et/ou du lait est éliminée et le sucre, tout en caramélisant, adhère aux éclats de fèves de cacao.

On tempère à 75-100°C pendant 1-6 minutes les éclats de fèves de cacao caramélisés, de manière à permettre la cristallisation du sucre, par exemple. Au cours de cette étape on évapore le surplus d'eau et/ou du lait.

Puis l'on traite thermiquement à 110-150°C pendant 1-10 minutes les éclats de fèves de cacao caramélisés, de manière à finaliser la caramélisation du sucre à la surface des éclats de fèves de cacao.

Enfin, on peut refroidir à température ambiante les éclats de fèves de cacao caramélisés après les avoir traités thermiquement, par exemple. On peut notamment les refroidir sur une grille munie d'un système de refroidissement par soufflerie ou aspiration d'air filtré.

La présente invention concerne également l'utilisation d'éclats de fèves de cacao pour la fabrication d'un produit alimentaire caractérisé en ce que les éclats de fèves sont caramélisés et sont enrobés de 10 à 80 % de sucre caramélisés et en ce que l'on incorpore au moins 1% d'éclats de fèves de cacao caramélisés au produit alimentaire au cours de sa fabrication. Ces éclats de fève de cacao caramélisés sont susceptibles d'être obtenus par la mise en oeuvre du présent procédé.

On peut notamment les utiliser pour la fabrication de biscuits, de tablettes de chocolat ou de crèmes glacées en cornet, en vrac ou en bâtonnet.

La présente invention est décrite plus en détails dans les exemples non limitatifs ci-après. Dans ces exemples, les pourcentages sont donnés en poids, sauf indication contraire.

### Exemple 1

On prépare dans une turbine un mélange comprenant 24 kg d'éclats de fèves de cacao torréfié, 16 kg de sucre et 8 1 d'eau.

On traite à chaud ce mélange à 110°C pendant 25 minutes, tout en brassant, de manière à obtenir une caramélisation relativement homogène du sucre à la surface des éclats de fèves de cacao. On effectue le brassage à 20 t/min.

On tempère alors les éclats de fèves de cacao caramélisés à 100° C pendant 2 minutes.

Puis, on les traite thermiquement à 140° C pendant 3 minutes.

Enfin, on refroidit les éclats de fèves de cacao caramélisés à température ambiante. Pour ce faire, on les déverse, hors de la turbine, sur une grille munie d'un système de refroidissement par aspiration d'air filtré.

On stocke alors les éclats de fèves de cacao caramélisés ainsi préparés dans des cartons, jusqu'à leur utilisation.

### Exemple 2

On utilise les éclats de fèves de cacao caramélisés tels qu'obtenus à l'exemple 1 pour la fabrication d'une crème glacée.

Pour ce faire, on dissout dans 494 g d'eau à 65° C, 92,3 g de lait écrémé en poudre, 150 g de saccharose, 26,2 g de sirop de glucose et 5 g d'émulsifiant.

On y ajoute 4 g d'arôme de vanille et 228,5 g de crème à 35% de matière grasse.

On homogénéise cette préparation dans un homogénéisateur de type Rannie, commercialisé par Kindler Maschinen AG, Postfach 297, CH-8021 Zürich, en deux passages successifs, le premier à 140 bar et le second à 40 bar.

On pasteurise la préparation homogénéisée à 83° C pendant 30 s dans un échangeur à plaques.

On la refroidit à 4° C et on la laisse reposer 12 h à cette température avant d'effectuer le glaçage dans un freezer de type HOYER MF50 commercialisé par APV TECHNOHOY, Axel Kiers Vej 28-30, DK-8270 Aarhus-Hojbjerg.

Puis, l'on ajoute 10% d'éclats de fèves de cacao caramélisés à la crème glacée ainsi obtenue.

On durcit ensuite cette crème glacée dans une cellule de refroidissement à air pulsé et on la stocke à -35° C.

Après tempérage à -18° C, cette crème glacée présente une texture onctueuse et un goût de vanille auquel se mélange un goût prononcé de cacao, du fait de la présence des éclats de fèves de cacao caramélisés.

### Exemple 3

On utilise les éclats de fèves de cacao caramélisés tels qu'obtenus à l'exemple 1 pour la fabrication d'une tablette de chocolat.

Pour ce faire, on coule la coquille puis on la retourne de manière à éliminer l'excédent de chocolat. La coquille peut être composée de 10 % de pâte de cacao, 26 % de lait en poudre, 41,5 % de sucre, 22,3 % de beurre de cacao, 0,19 % d'émulsifiant et 0,01 % d'arôme de vanille, par exemple.

On dépose la coquille ainsi retournée dans une chambre froide à 8° C pendant 5 min, de manière à durcir légèrement le chocolat de la coquille de la tablette.

Puis à la sortie de la chambre froide, on retourne la coquille et on la chauffe aux infra-rouges pendant 3 secondes.

Puis on dépose, à partir de buses d'injection, la crème de fourrage, à laquelle on a incorporé 10% d'éclats de fèves de cacao caramélisés. La crème de fourrage peut être composée de 40 % de noisettes rôties, 40 % de sucre, 8 % de pâte de cacao, 7,5 % de beurre de cacao, 4,2 % de lait en poudre, 0,26 % d'émulsifiant et 0,04 % d'arôme, par exemple.

On tapotte légèrement l'ensemble, de manière à bien répartir la crème de fourrage au fond de la coquille.

On laisse l'ensemble en chambre froide pendant 4 min à 4° C.

A la sortie de la chambre froide, on coule le talon, de manière à recouvrir l'ensemble de la surface de la tablette. Le talon peut être composé de 10 % de pâte de cacao, 26 % de lait en poudre, 41,5 % de sucre, 22,3 % de beurre de cacao, 0,19 % d'émulsifiant et 0,01 % d'arôme de vanille, par exemple.

On met la tablette de chocolat fourrée ainsi préparée dans une chambre froide à 0° C pendant 15 min avant de la démouler.

On obtient ainsi une tablette de chocolat à la texture fondant et au goût prononcé de cacao.

### Exemple 4

On utilise les éclats de fèves de cacao caramélisés tels qu'obtenus à l'exemple 1, pour la fabrication de sablés.

Pour ce faire on mélange 800 g de beurre et 400 g de sucre glace.

On ajoute à cette préparation 150g de blanc d'oeuf et 1200 g de farine.

On pétrit la pâte ainsi préparée.

Puis l'on mélange à cette pâte 350 g d'éclats de fèves caramélisées.

On abaisse la pâte et on la découpe en palets de 6 mm d'epaisseur et 6 cm de diamètre.

On cuit les palets ainsi préparés au four à 200°C pendant 10 min.

On obtient ainsi des sablés au goût biscuité auquel se mélange un goût prononcé de cacao, du fait de l'incorporation des éclats de féves de cacao caramélisés.

## Revendications

1. Procédé de préparation d'éclats de fèves de cacao caramélisés, dans lequel:
- on prépare un mélange comprenant 38-72% d'écats de fèves de cacao, 18-40% de sucre et 10-22% d'eau et/ou de lait,
- on traite à chaud ce mélange à 90-120°C pendant 15-35 min, de manière à obtenir des éclats de fèves de cacao caramélisés,
- on tempère les éclats de fèves de cacao caramélisés à 75-100°C pendant 1-6 min,
- puis on les traite thermiquement à 110-150°C pendant 1-10 min.

2. Procédé selon la revendication 1, **caractérisé en ce que** l'on refroidit à température ambiante les éclats de fèves de cacao caramélisés après les avoir traités thermiquement.

3. Utilisation d'éclats de fèves de cacao pour la fabrication d'un produit alimentaire, **caractérisé en ce que** les éclats de fèves sont caramélisés et sont enrobés de 10 à 80% de sucre caramélisés et **en ce que** l'on incorpore au moins 1% d'éclats de fèves de cacao caramélisés au produit alimentaire au cours de sa fabrication.

4. Utilisation selon la revendication 3, **caractérisé en ce que** le produit alimentaire est une tablette de chocolat.

5. Utilisation selon la revendication 3, **caractérisé en ce que** le produit alimentaire est une crème glacée.

## Patentansprüche

1. Verfahren zur Herstellung von karamelisierten Kakaobohnensplittern, bei dem man
- eine Mischung herstellt, die aus 38-72% Kakaobohnensplittern, 18-40% Zucker und 10-22% Wasser und/oder Milch besteht,
- diese Mischung 15-35 min bei 90-120°C warm behandelt, so dass man karamelisierte Kakaobohnensplitter erhält,
- die karamelisierten Kakaobohnensplitter 1-6 min bei 75-100°C temperiert
- und sie dann 1-10 min bei 110-150°C thermisch behandelt.

2. Verfahren nach Anspruch 1, **dadurch gekennzeichnet, dass** man die karamelisierten Kakaobohnensplitter nach ihrer thermischen Behandlung auf Raumtemperatur kühlt.

3. Verwendung von Kakaobohnensplittern zur Herstellung eines Nahrungsmittelprodukts, **dadurch gekennzeichnet, dass** die Kakaobohnensplitter karamelisiert sind und mit 10 bis 80% karamelisiertem Zucker umhüllt sind und dass man dem Nahrungsmittelprodukt bei seiner Herstellung mindestens 1% karamelisierte Kakaobohnensplitter beigibt.

4. Verwendung nach Anspruch 3, **dadurch gekennzeichnet, dass** das Nahrungsmittelprodukt eine Schokoladetafel ist.

5. Verwendung nach Anspruch 3, **dadurch gekennzeichnet, dass** das Nahrungsmittelprodukt Speiseeis ist.

## Claims

1. Process for preparing caramelized cocoa bean nibs, wherein:
- a mixture is prepared comprising 38-72 % of cocoa bean nibs, 18-40 % sugar and 10-22 % water and/or milk,
- the mixture is treated hot at 90-120°C for 15-35 min, so as to obtain caramelized cocoa bean nibs,
- the caramelized cocoa bean nibs are tempered at 75-100°C for 1-6 min,
- they are then treated at 110-150°C for 1-10 min.

2. Process according to claim 1, **characterized in that** the caramelized cocoa bean nibs are cooled to ambient temperature after having been heat-treated.

3. Use of cocoa bean nibs for the production of a food product, **characterized in that** the bean nibs are caramelized and are coated with 10 to 80 % caramelized sugar and **in that** at least 1 % of caramelized cocoa bean nibs are incorporated in the food product during its production.

4. Use according to claim 3, **characterized in that** the food product is a bar of chocolate.

5. Use according to claim 3, **characterized in that** the food product is an ice cream.
